Europäisches Patentamt

European Patent Office

Office européen des brevets

(11) Publication number: **0 128 586**
**B1**

## (12) EUROPEAN PATENT SPECIFICATION

(45) Date of publication of patent specification: **25.04.90**

(21) Application number: **84106754.9**

(22) Date of filing: **13.06.84**

(51) Int. Cl.⁵: **G 11 B 5/127**

(54) **Magnetic head.**

(30) Priority: **13.06.83 JP 105192/83**
**12.10.83 JP 189196/83**

(43) Date of publication of application:
**19.12.84 Bulletin 84/51**

(45) Publication of the grant of the patent:
**25.04.90 Bulletin 90/17**

(84) Designated Contracting States:
**DE FR GB**

(56) References cited:
**EP-A-0 061 290      DE-A-2 754 536**
**EP-A-0 081 239      DE-A-3 007 175**
**AT-B- 357 788**

**SOVIET INVENTIONS ILLUSTRATED, section
EL, week E 24, July 28, 1982 DERWENT
PUBLICATION LTD., London, T 03**

**The file contains technical information
submitted after the application was filed and
not included in this specification**

(73) Proprietor: **Matsushita Electric Industrial Co.,
Ltd.
1006, Oaza Kadoma
Kadoma-shi Osaka-fu, 571 (JP)**

(72) Inventor: **Higashionji, Masaru
26-8, Kisabe-nishi 3-chome
Katano City, 576 (JP)**
Inventor: **Kuroe, Akio
10-2, Nanseidai 4-chome
Katano City, 576 (JP)**
Inventor: **Sawai, Eisuke
1-507, Kuzuha-hanazono-cho 5-chome
Hirakata City, 573 (JP)**
Inventor: **Satomi, Mitsuo
52-4, Kisabe 6-chome
Katano City, 576 (JP)**
Inventor: **Sakakima, Hiroshi
28-15, Katahoko-honmachi
Hirakata City, 573 (JP)**
Inventor: **Kondo, Kenji
11-409, 3-3, Daito-cho
Miyakojima-ku Osaka City, 534 (JP)**

(74) Representative: **Dr. Elisabeth Jung Dr. Jürgen
Schirdewahn Dipl.-Ing. Claus Gernhardt
P.O. Box 40 14 68 Clemensstrasse 30
D-8000 München 40 (DE)**

## Description

### 1. Field of the invention:

The present invention relates generally to a magnetic head according to the introductory part of claim 1. Such a magnetic head is disclosed in the EP—A—0081 239 published June 15, 1983.

### 2. Description of the prior art:

A typical conventional magnetic head uses an alloy such as permalloy, Sendust or Alperm etc. (Trade mark or Trade name) and ferrite for a core. At present, ferrite is the best of these materials in abrasion-resistance, but ferrite has lower saturation flux density BS by 30—50% than the above-mentioned alloy material. In case that the ferrite magnetic head is applied to recording with a high density magnetic recording medium which has appeared recently and has a high coercive force, the magnetic saturation of the core material is a problem, and its performance is not so good compared with the material of the alloy. On the other hand, the alloy material is not satisfactory in the abrasion-resistance in comparison with ferrite, but it is superior in saturation flux density BS.

Under these backgrounds, an amorphous ferromagnetic alloy which is superior in magnetic characteristic has appeared before the footlights. However, since it is difficult to make thick material of the amorphous alloy, in order to assemble the core of the magnetic head, the core keeps its mechanical strength by being pinched with a pair of non-magnetic clamping plates on both sides thereof. The technical art of bonding of these materials becomes extremely important.

Usually, glass-bonding is used for the ferrite magnetic head, and for the alloy material, a brazing with silver or the like material is adopted, wherein working temperature is usually over 700°C. While, about the amorphous alloy, the working temperature usually must be lower than 500°C when considering the magnetic characteristic — a crystallization temperature (hereinafter is referred as TX). When the amorphous ferromagnetic alloy is heated over the crystallization temperature TX, it crystallizes and becomes brittle, and furthermore the magnetic characteristic is deteriorated, and such an amorphous ferromagnetic alloy becomes not usable as the magnetic material. Therefore, in case that the amorphous material is used, bonding of component members of the head core or forming the magnetic gap should be made preferably by bonding the magnetic material with a known epoxy resin or a soldering material. Since the working temperature of these bonding materials is under 300°C at most, these bonding methods are safe being free from the crystallization, but there is a shortcoming that the bonding strength is low.

The width of a track in an audio head is comparatively wide and a magnetic gap is wide, too, and therefore, there is no problem of the bonding strength. However, concerning the heads for a video-tape recorder, a computer and a data recorder, their width of a track is very narrow (for example, several tens µm), and the magnetic gap is very narrow too (for example, under 0.3 µm). Accordingly, the present situation is that it is difficult to keep a precise width of the magnetic gap by the bonding or soldering material.

Therefore, as a method to precisely keep the magnetic gap, the bonding by glass is the most reliable. However, in case that the magnetic head is composed by using the amorphous ferromagnetic metal, the process of the bonding and the forming of the magnetic gap should be preferably carried out under the temperature of 500°C, and a low melting point glass material having the melting point under 500°C is needed for this process.

A typical conventional low melting point high lead glass has a softening point of 350°C in view of the bonding strength. This softening point of 350°C is the lower limit. In order to obtain sufficiently low viscosity for bonding, these bonding glasses must be treated over the temperature of 550°C. However, the amorphous crystallize and lost the characteristic of magnetic material even under the above-mentioned temperature, and thus the bonding by glass has not been usable. In other words, in case that the core is made from a material of poor heat-resistance such as an amorphous, there has been a problem that a rigidly bonded magnetic gap could not be formed.

The EP—A—0061 290 discloses already a magnetic head comprising two core pieces of ferromagnetic material, a metal layer formed on an inside part of at least one core piece, said inside part being contiguous to a plane of gap of said core piece,

at least a gap spacer inserted between said gap, and

a region of bonding glass formed at least on said metal layer.

The two core pieces, however, are not of amorphous ferromagnetic material.

The use of amorphous ferromagnetic material for magnetic heads is known per se from EP—A—0061 290.

As far as the EP—A—0081 239 is concerned—which shows already the features of the introductory part of claim 1—since the crystallization temperature TX of amorphous alloys is below 600°C, the bonding process at a temperature of 800°C disclosed in the EP—A—0081 239 cannot be applied to amorphous alloys. Namely, the teaching of the EP—A—0081 239 can be applied only to crystallized materials. Consequently, the low temperature bonding process according to the present invention is restricted to amorphous material having a relatively low crystallization temperature.

### Summary of the invention

It is an object of the invention to provide a magnetic head which has a structure bonded by glass at a lower temperature compared with the usual bonding temperature of a low melting point glass.

A magnetic head having the features of the preamble of claim 1 in accordance with the present invention comprises the characterizing features of claim 1.

Brief explanation of the drawing

Fig. 1 is a graph showing wetting angles on a lead glass for various kinds of the material.

Fig. 2 is a decomposed perspective view of a left half core and a right half core of a magnetic head.

Fig. 3, Fig. 4 and Fig. 5 are perspective views of the various types of magnetic heads.

Description of the preferred embodiment

An amorphous alloy material, for example, $Co_{81}$-$Nb_{15}$-$Zr_4$ is used as a source for forming a core of the magnetic head. This amorphous alloy material is, for example, spattered on a thoroughly cleaned substrate of glass-ceramics, high melting point glass, ceramic or ferrite, to form component pieces of a core of the magnetic head. Then, on the part adjacent to a face to become gap of a magnetic head a layer of metal, to which a low melting point glass has good melting, is formed. Cr, Cu, Ag, Ti and Al are suitable as the material of the metal layer, and the metal layer is formed by depositing or spattering. Then, a layer of low melting point glass, for instance, that including lead is used to bond a pair of the component pieces. Though the low melting point glass has poor wetting property at a high viscosity state, the art according to the present invention can provide a satisfactory bonding with glass at the state of comparatively high viscosity. As a result, the glass bonding is processed at the low working temperature.

Preferable part(s) on which the metal layer is (are) to be formed is (are), for example, a face contiguous to each magnetic gap face, both inside walls of hole of a ring-shaped core of a magnetic head, an inside wall of a hole or slot of either one of left or right component piece of a magnetic head, or inside wall(s) of hollow or recess part(s) formed on the magnetic gap plane of a core of a magnetic head. As a result of the measuring of the spattered material by differential thermal analyzer the crystallization temperature TX was observed as 540°C. One or several layers of the spattered layer of ferromagnetic amorphous alloy, each being about 10 μm thick, are formed on the substrate with thin $SiO_2$ layers each being about 0.1 μm thick as insulation layers inbetween. Then, on the ferromagnetic amorphous alloy layers formed on the substrate a non-magnetic sheet, which is of the same or similar material as the substrate, is placed to form a laminated block. A pair of blocks of the half core piece are then bonded by to form a magnetic head. In this process, the temperature of the glass bonding by the low melting point glass is limited as follows:

For example, in case of the above-mentioned $Co_{81}$-$Nb_{15}$-$Zr_4$, the crystallization temperature TX which makes the ferromagnetic amorphous alloy lose performance of a magnetic core by crystallization is 540°C. But in making a head, the temperature of 540°C is not of course inadmissible, and an upper limit of the usable temperature range, is lower than the above-mentioned temperature though it depends on the processing period, is between 450°C and 500°C. Therefore, the useful low melting glass is limited to that having a low melting point in the above temperature range.

The following embodiment uses a glass including lead as one of the components. For example, the glass that has the softening point of 365°C consists of PbO of 84%, $B_2O_3$ of 10%, $Al_2O_3$ of 3% and $SiO_2$ of 3%. In order to lower the softening point still more, it is necessary to increase a component ratio of PbO. But, as a result, the glass becomes unstable, and the problem of poor strength is induced.

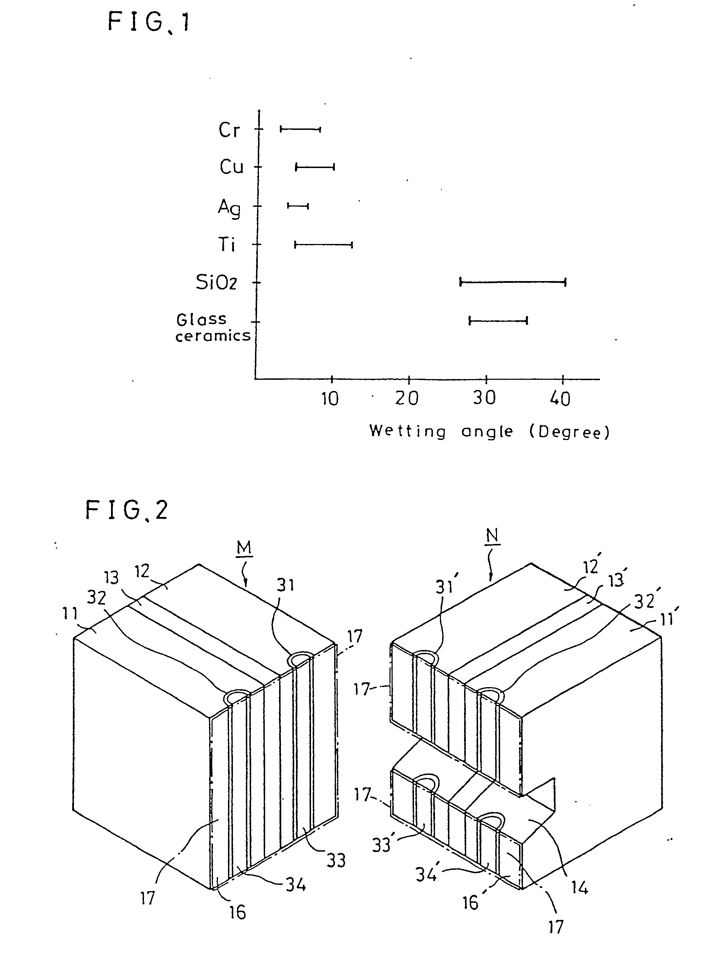

Fig. 2 shows a concrete embodiment. Amorphous ferromagnetic core pieces 13 or 13' can be formed each by spattering on a non-magnetic substrate 11 or 11' such as of glass. The core pieces 13 or 13' may consist of a composite layer consisting of one or several amorphous ferromagnetic films as magnetic material and $SiO_2$ films as insulator films inbetween which are alternately piled up by alternate spattering. For instance, three films each 10 μm thick may be laminated with 0.5 μm $SiO_2$ film inbetween. On the surface of the core pieces 13 or 13' of the composite layer, another sheet of glass 12 or 12' is placed, thereby constituting a sandwich structure with the core pieces 13 or 13' in the center part. A slot 14 for a coil is bored in the half block N. Then, chrome may be spattered 1 μm thick inside the coil slot 14 at an oblique face which is contiguous to a gap plane 16', to form a chrome layer (metal layer). A gap face 16 and 16' each may be ground flat in a subsequent process. In this case, amorphous ferromagnetic material of $Co_{81}$-$Nb_{15}$-$Zr_4$ can be used as a material of the core piece 13 or 13', and glass ceramics including silica lithium can be used as a main component for a pair of glass substrates 11 and 11', and 12 and 12'. The crystallization temperature of the above-mentioned amorphous ferromagnetic material was showed to be 540°C, but a decrease of saturation flux density is observed for the processes under the temperature of 540°C. And for practical usage, the maximum limit of the temperature and time are 480°C and 30 minutes, respectively. In case that a chrome layer is formed by spattering, the temperature rise of the amorphous itself can be suppressed under the temperature of 200°C by sufficiently cooling of the substrate.

As shown in Fig. 2, a gap spacer 17 is formed by spattering of $SiO_2$ for instance, and its thickness can be 1200 Å for each of the left and right core half blocks M and N, respectively. In the above-mentioned process, the temperature rise of the amorphous itself is suppressed under the temperature of 200°C by sufficiently cooling the substrate to be sputtered. It is to be noted that this gap spacer 17 should not be formed on the chromium layer.

In order to form the gap a low melting point lead glass can be used which may be heated at the temperature of 480°C for 30 minutes. This low melting point lead glass consists of PbO 84%, $B_2O_3$ 10%, $Al_2O_3$ 3%, and $SiO_2$ 3%. Though the softening point of this glass is 365°C, a temperature of over 500°C is needed to obtain a viscosity of $10^2$ poise suitable for working of glass. By the way, in order to drop this softening point, for example, it is thought to increase the content of PbO. The more the content of PbO increases, the more the soften point drops, and as a result, the glass comes into an unstable state, and the state of devitrification or much lowering of strength of glass is observed, and the glass can not stand mechanical working.

When a chrome layer is provided as intermediate layer the glass has good wetting property and flows enough on the core blocks M and N even at the temperature of 480°C, and becomes a bonding layer 181, and the glass layer has a sufficient bonding strength which can stand mechanical working. By the way, in case that the glass bonding was processed at the temperature of 480°C without forming such chrome layer, the core block was not wetted with the glass, and the glass became small round balls by the effect of surface tension and the bonding was impossible.

The wetting property of this low melting point lead glass has been greatly improved because the foundation was the chrome layer. As shown in Fig. 1, by measurements of the wetting angles of the low melting point lead glass against various foundation, it was recognized that the wetting angle became small by using chrome, copper, silver or titanium as the foundation.

A spattered film of $SiO_2$ and a low melting point glass layer on the $SiO_2$ film can be provided for good wetting of glass.

As a result, a bonding with good wetting property and a large mechanical strength can be obtained. Above result shows that the metal film is not necessary to be provided on both pieces 11, 12, 13, and 11', 12', 13', of the core. That is, the metal film may be provided on at least either one core piece, and the glass layer may be formed on the other core piece, thereby to provide a glass-bonding of good wetting property and of great mechanical strength.

It is understood that the forming of the Cr film even only on an oblique place may be also greatly effective. Then an alignment of the positions of the coil slots of two core pieces is unnecessary, and the butt bonding of both core halfs can be fairly easy in the manufacturing process.

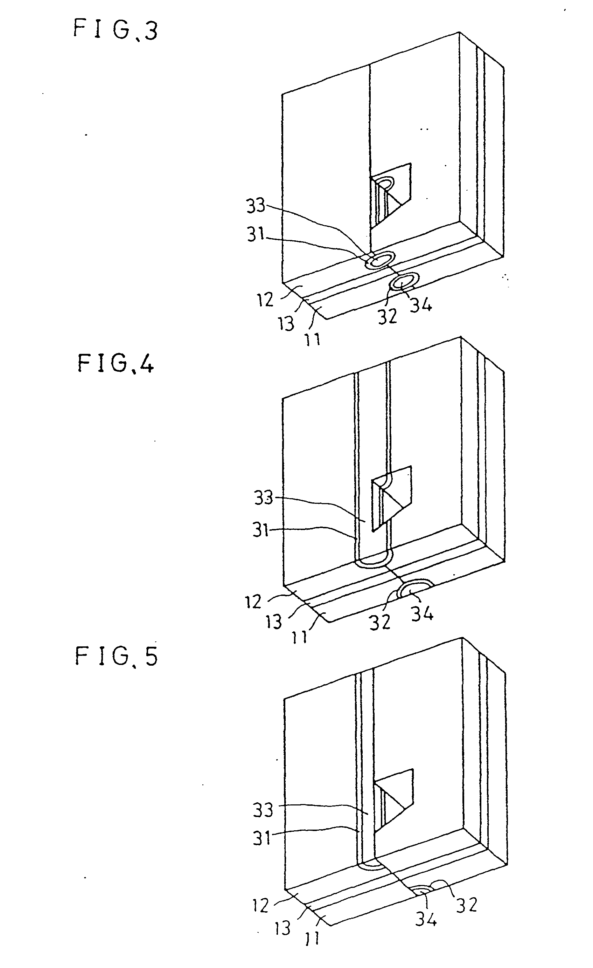

In the embodiment of Fig. 2 particularly amorphous ferromagnetic core pieces 13 and 13' are clamped by glass substrates 11 and 12 and also by 11' and 12', respectively, and bonded, to form half blocks M and N. Then, on each half blocks M and N, the grooves 33 and 34, and also 33' and 34' are formed on both sides of the amorphous ferromagnetic core 13, 13' on the face of the magnetic gap 16, respectively. Furthermore, chrome layers 31 and 32, and also 31' and 32', are formed on the inside wall of the grooves. Then, each groove 33, 34, 33' and 34' is filled up by the low melting point lead glass, and the gap face 16 is ground flatly as shown in Fig. 2. Subsequently, the spacer 17, (0.1 μm thick) is provided at least on the gap part in the lower part of the Fig. 2, and the left and the right half core pieces are butted together to form a block. Then the block is pressed from both sides and heated. As a result, the half core pieces M and N are bonded with a predetermined gap inbetween, as shown in Fig. 3.

The low melting point glass fillings melt and erode the spacer 17 thereon and bond the two half core pieces each other. The glass filled parts of the obtained core may be exposed on the outside face as shown in Fig. 4. In such case, the filled parts are preferably arranged substantially in symmetry with respect to a center plane of the core, or in a point of symmetry with respect to the vertical center axis on the gap plane as shown in Fig. 5. In this embodiment, when the glass is filled in the grooves of the gap faces, by forming the metal layer on the inside wall of the grooves the glass can be filled at a fairly low temperature.

In the cases of Fig. 3 and Fig. 4, since the bonding is processed between the same kind of glass, a reliable bonding is obtained at a lower temperature than the cases of the first and second embodiments.

**Claims**

1. A magnetic head comprising two core pieces (M, N) wherein ferromagnetic core members (13, 13') made of amorphous ferromagnetic material having a crystallization temperature are sandwiched by a pair of nonmagnetic substrates (11, 12; 11', 12'), at least one (N) of said core pieces (M, N) being provided with a coil winding recess (14) and at least one gap spacer (17) being provided on the surfaces to be butted to each other, characterized in that grooves (33, 34; 33', 34') are formed on said nonmagnetic substrates (11, 12; 11', 12') of at least one core piece (M, N) along said ferromagnetic members (13, 13'), metal layers (31, 32; 31', 32') are formed on inner walls of said grooves (33, 34; 33', 34') and both the core pieces (M, N) are bonded by adhering glass (17', 18') filled in said grooves (33, 34; 33', 34') and the bonding glass is a low melting point glass having a melting point below said crystallization temperature.

2. A magnetic head in accordance with claim 1, wherein said substrate (11, 12; 11', 12') is a glass ceramic plate.

3. A magnetic head in accordance with claim 1 or 2, wherein said gap spacer (17) is a double layered composite layer consisting of a first layer (18') of high lead low melting point glass and a second layer (17') of higher melting point glass.

## Patentansprüche

1. Magnetkopf, umfassend zwei Kernstücke (M, N), wobei ferromagnetische Kernteile (13, 13') aus amorphem ferromagnetischem Material, welches eine Kristallisationstemperatur hat, zwischen einem Paar von nicht magnetischen Substraten (11, 12; 11', 12') angeordnet ist, und wobei wenigstens eines (N) der Kernstücke (M, N) mit einer Spulenwickelausnehmung (14) versehen ist und wenigstens ein Spaltabstandsteil (17) an den Flächen vorgesehen ist, die aneinanderstoßen sollen, dadurch gekennzeichnet, daß Nuten (33, 34; 33', 34') an den nicht magnetischen Substraten (11, 12; 11', 12') wenigstens eines Kernstücks (M, N) entlang der ferromagnetischen Teile (13, 13') gebildet sind, Metallschichten (31, 32; 31', 32') an inneren Wänden der Nuten (33, 34; 33', 34') gebildet sind, und beide Kernstücke (M, N) aneinandergebunden sind durch Anhaftenlassen von Glas (17', 18'), welches in die Nuten (33, 34; 33', 34') gefüllt ist, wobei das Bindungsglas ein Glas mit niedrigem Schmelzpunkt ist, dessen Schmelzpunkt unterhalb der Kristallisationstemperatur liegt.

2. Magnetkopf nach Anspruch 1, wobei das Substrat (11, 12; 11', 12') eine glaskeramische Platte ist.

3. Magnetkopf nach Anspruch 1 oder 2, wobei der Spaltabstandsteil (17) eine zweischichtige zusammengesetzte Schicht ist bestehend aus einer ersten Schicht (18') aus Glas mit hohem Bleigehalt und niedrigem Schmelzpunkt und einer zweiten Schicht (17') aus Glas mit höherem Schmelzpunkt.

## Revendications

1. Tête magnétique comprenant deux morceaux de noyau (M, N) dans laquelle des éléments de noyau ferromagnétiques (13, 13') en matériau ferromagnétique amorphe ayant une température de cristallisation sont placés entre une paire de substrats amagnétiques (11, 12; 11', 12'), au moins l'un (N) des morceaux de noyau (M, N) étant muni d'un évidement (14) pour enroulement de bobine et au moins une entretoise (17) pour entrefer étant fournie sur les surfaces devant être en aboutement, caractérisée en ce que: des rainures (33, 34; 33', 34') sont ménagées dans les substrats amagnétiques (11, 12; 11', 12') d'au moins l'un des morceaux de noyau (M, N) le long des éléments ferromagnétiques (13, 13'); des couches métalliques (31, 32; 31', 32') sont formées sur les parois intérieures des rainures (33, 34; 33', 34') et les deux morceaux de noyau (M, N) sont liés par du verre adhésif (17', 18') remplissant les rainures (33, 34; 33', 34') et le verre de liage est un verre à bas point de fusion ayant un point de fusion inférieur à la température de cristallisation.

2. Tête magnétique selon la revendication 1, dans laquelle: le substrat (11, 12; 11', 12') est une plaque en céramique de verre.

3. Tête magnétique selon la revendication 1 ou 2, dans laquelle: l'entretoise (17) de l'entrefer est une couche composite à double couche constituée d'une première couche (18') de verre à bas point de fusion à teneur élevée en plomb et d'une seconde couche (17') de verre à point de fusion plus élevé.

## FIG.1

## FIG.2

FIG.3

FIG.4

FIG.5